# EUROPEAN PATENT SPECIFICATION

(11) **EP 2 388 053 B1**
(45) Date of publication and mention of the grant of the patent: **18.05.2022**
(21) Application number: 10743530.7
(22) Date of filing: 12.02.2010
(51) Int. Cl.: A63F 13/23

(54) **COMPATIBLE ADAPTER DEVICE AND COMPATIBLE PROCESSING METHOD**
KOMPATIBLE ADAPTERVORRICHTUNG UND KOMPATIBLES VERARBEITUNGSVERFAHREN
DISPOSITIF D'ADAPTATEUR COMPATIBLE ET PROCÉDÉ DE TRAITEMENT COMPATIBLE

(30) Priority: 19.02.2009 JP 2009037047
(43) Date of publication of application: 23.11.2011
(73) Proprietor: Sony Interactive Entertainment Inc., Tokyo 108-8270 (JP)
(72) Inventor: SHINJO, Sadaaki, Tokyo 1080075 (JP); SUGAWARA, Akihiko, Tokyo 1080075 (JP); HAKAMATANI, Tadayasu, Tokyo 1080075 (JP)
(74) Representative: D Young & Co LLP
(86) International application number: PCT/JP2010/000850
(87) International publication number: WO 2010/095400

(56) References cited:
- EP-A1- 1 141 850
- EP-A1- 1 271 307
- JP-A- 10 137 447
- JP-A- 2001 314 644
- JP-A- 2002 045 570
- JP-A- 2006 085 652
- US-A1- 2004 157 664
- US-A1- 2006 281 556
- US-B1- 7 445 551
- Apple: "Apple IIe Card Owner's Guide", Apple2online.com Website , 1 January 1992 (1992-01-01), XP002713568, Retrieved from the Internet: URL:http://apple2online.com/web_documents/ apple_iie_card_owner__s_guide.pdf [retrieved on 2013-09-24] -& Wikipedia: "Apple IIe card", www.wikipedia.com , 17 February 2009 (2009-02-17), XP002713569, Retrieved from the Internet: URL:http://en.wikipedia.org/w/index.php?ti tle=Apple_IIe_Card&oldid=271339893 [retrieved on 2013-09-24]
- ASPECT MOOK MOTTO ASOBO! PS3&PSP 09 June 2008, pages 10 - 11, 14, 16
- GEKKAN COMPUTER DIGEST vol. 24, no. 11, WH, 10 November 1998, page 61
- PC-GIGA TOKUBETSU SHUCHU KOZA 248 INFOREST MOOK EMULATOR KENKYUSHITSU PSP+DS, 1ST PRINT 05 June 2008,

## Description

### [TECHNICAL FIELD]

The present invention relates to a compatibility adapter device, connected to a new-generation entertainment device, and a compatibility processing method that provide for downward compatibility.

### [BACKGROUND ART]

High-quality graphics find increasingly widespread use. For example, personal computer or dedicated game devices run applications like games or simulation that uses high-quality three-dimensional graphics or play back video content in which live action and computer graphics are blended.

Improvement in the technology of graphical presentation in personal computers and game devices is largely due to improvement in computing power and image processing capability achieved by the development of CPUs and GPUs (Graphics Processing Unit). In order to improve graphic performance, chip vendors and hardware manufacturers are exercising efforts to develop graphic chips specifically designed for rendering functions. As a result, graphic chips that incorporate advanced rendering functions are developed one after another, promising future advances and expandability of graphic system. Further, software technology as well as hardware technology is blended in order to achieve even higher graphics. For improvement of rendering quality, it is important to efficiently utilize high-performance rendering functions of graphic chips by taking full advantage of software technology.

Meanwhile, in addition to ensuring advancement in graphic systems, flexibility of providing for compatibility with old-generation programming languages and supporting various video output formats or protocols is called for in the development of graphic chips.

Patent document No. 1 discloses an entertainment device capable of running software for an old type.

[patent document No. 1] JP 2001-314644

The "Apple IIe Card Owner's Guide" by Apple, available from "apple2online.com", 1 January 1992, describes a compatibility card for use with the LC family of Macintosh computers to allow compatible Macs to run software designed for Apple II computers.

EP 1,271,307A describes an entertainment apparatus on which a program for an older version of the apparatus can be executed. In a normal mode, a first processor means functions as a main CPU and a drawing processor, whilst a second processor means operates as an input/output processor. In a second mode, in which a program for an older version is executed, the second processor means operates as a main CPU, and the first processor means continues to function as a drawing processor.

### [PROBLEM TO BE SOLVED BY THE INVENTION]

Many of the users of game devices available on the market with a new-generation graphic processor or multiprocessor expect downward compatibility capable of running game titles for an old model as well as game titles for a new model. New models may be provided with downward compatibility by having at least part of the old-generation processor system installed. This will, however, cause a disadvantage of increasing the product cost. Users who do not use game titles for an old model do not need downward compatibility functions and do not want to be forced to buy expensive products. At least part of the processing capability of the old-generation processor system may be emulated by the processor of a new model on a software basis. A problem is that the processor performance may often be insufficient to emulate the graphic operation.

In this background, a purpose of the present invention is to provide a compatibility adapter device capable of providing an entertainment device with downward compatibility by being connected to the entertainment device.

### [MEANS TO SOLVE THE PROBLEM]

The invention is defined by the appended claims.

### [ADVANTAGE OF THE PRESENT INVENTION]

According to the embodiment, an entertainment device can be provided with downward compatibility function easily by connecting the device to a compatibility adapter device.

### [BRIEF DESCRIPTION OF THE DRAWINGS]

Fig. 1 shows the configuration of an old-generation game device;
Fig. 2 shows a new-generation game device according to the first embodiment and a compatibility adapter connected to the game device;
Fig. 3 shows the configuration of the compatibility adapter of Fig. 2;
Fig. 4 is a flowchart showing the compatibility processing method according to the first embodiment;
Fig. 5 is a flowchart showing how the compatibility process by the compatibility adapter proceeds in detail;
Fig. 6 shows the configuration of the compatibility adapter according to the second embodiment;
Fig. 7 is a flowchart showing the compatibility processing method according to the second embodiment; and
Fig. 8 is a flowchart showing how the compatibility process by the compatibility adapter proceeds in detail.

### [BEST MODE FOR CARRYING OUT THE INVENTION]

### First embodiment

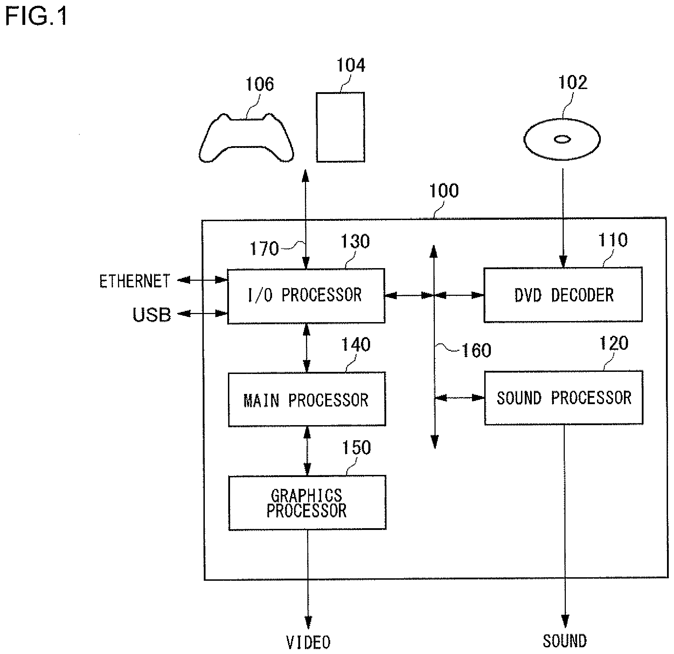

Fig. 1 shows the configuration of an old-generation game device 100. The old-generation game device 100 includes a DVD decoder 110, a sound processor 120, an I/O processor 130, a main processor 140, and a graphics processor 150.

The DVD decoder 110 and the sound processor 120 are connected to the I/O processor 130 via an internal bus 160.

The I/O processor 130 and the main processor 140 are connected to each other, and the main processor 140 and the graphics processor 150 are also connected to each other.

The DVD decoder 110 demodulates a reproduced signal read from a disk 102 such as a CD and a DVD, and supplies the demodulated data to the I/O processor 130. The sound processor 120 decodes and reproduces audio data and outputs the data to a speaker.

The I/O processor 130 delivers various data supplied from the DVD decoder 110 to the main processor 140. The I/O processor 130 is connected to I/O devices such as a game device controller 106 and a memory card 104 via a serial interface 170.

The I/O processor 130 supplies the input data from the game device controller 106 controlled by the user to the main processor 140, and supplies the vibration data etc. that the main processor 140 generates to the game device controller 106. The I/O processor 130 also controls the operation of reading and writing data in the memory card 104 performed by the main processor 140.

The I/O processor 130 has an interface of Ethernet (registered trademark) or USB (Universal Serial Bus), and supplies an IP packet and a USB signal to the main processor 140, respectively.

The main processor 140 runs software stored in the disk 102, and performs predetermined arithmetic processing. The graphics processor 150 has a three-dimensional rendering function, performs a rendering process according to a direction from the main processor 140, generates frame data, and outputs a video signal to the display.

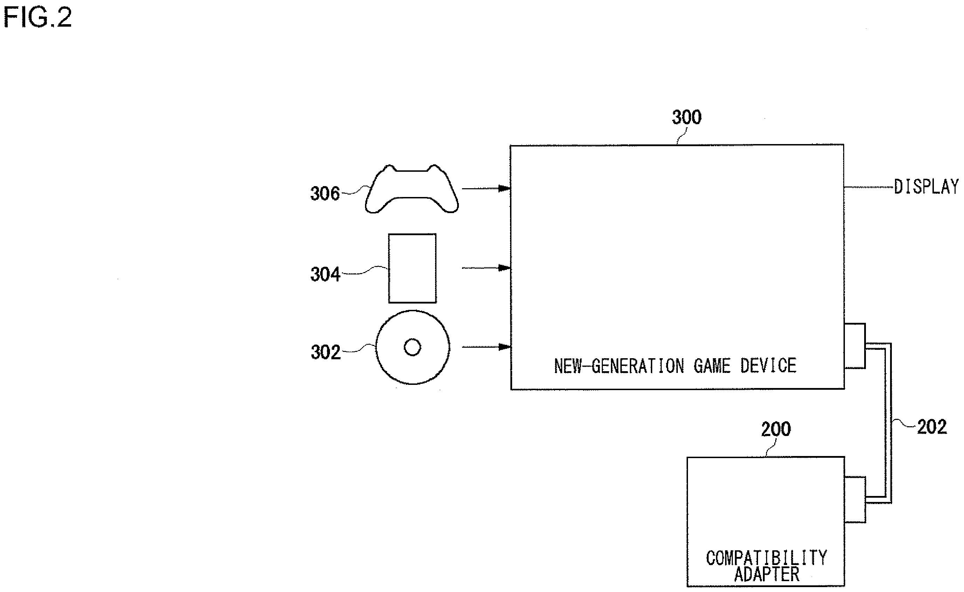

Fig. 2 shows a new-generation game device 300 and a compatibility adapter 200 connected to the game device. The new-generation game device 300 is a game device with the latest processor system built in. A game device controller 306 and a memory card 304 are connected to the new-generation game device 300. The disk drive of the new-generation game device 300 reads software such as a game, from a disk 302 such as a DVD.

The new-generation game device 300 is not compatible with the old-generation game device 100 of Fig. 1 and cannot run a game title for an old model. Therefore, in order to give downward compatibility to the new-generation game device 300, the compatibility adapter 200 is connected via a network connection cable 202. The compatibility adapter 200 is a compatibility processing unit with at least a part of function of the old-generation game device 100 of Fig. 1. The compatibility adapter receives data from the new-generation game device 300 via the network connection cable 202, performs a compatibility process, and returns a processing result to the new-generation game device 300.

The new-generation game device 300 can authenticate the disk inserted in the disk drive, and can identify whether the disk is for a new model or for an old model based on the disk type. If the disk 302 is for an old model, the new-generation game device 300 reads a game program for an old type from the disk 302. The game device controller 306 and the memory card 304 of the new-generation game device 300 are used for input and output. As regards arithmetic processing, downward compatibility is achieved by using the compatibility function of the compatibility adapter 200.

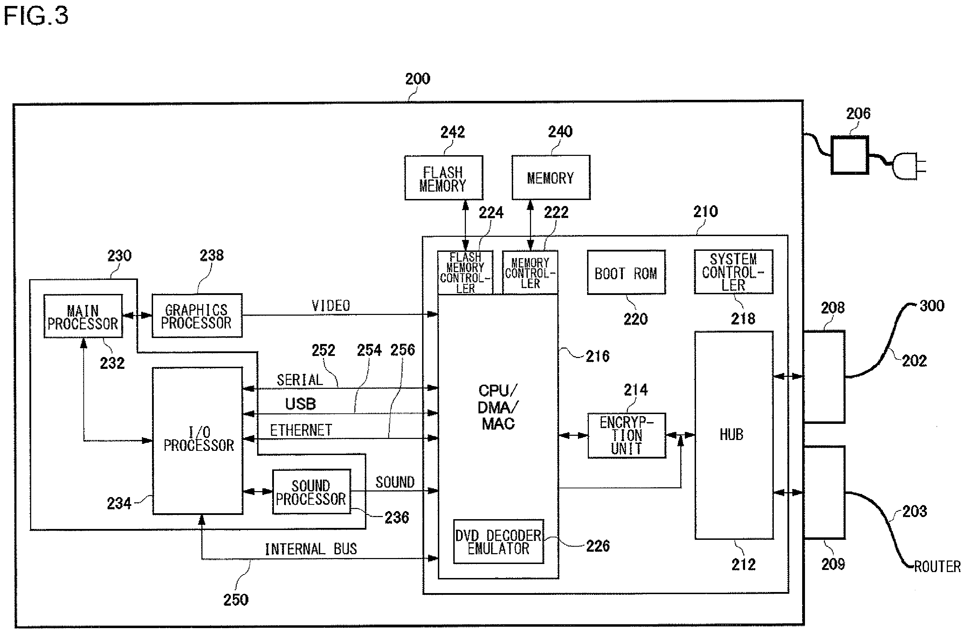

Fig. 3 shows the configuration of the compatibility adapter 200. The compatibility adapter 200 has a power supply adapter 206 and two network connection terminals 208 and 209. The first network connection terminal 208 is connected to the network connection terminal of the new-generation game device 300 using the network connection cable 202. The second network connection terminal 209 is connected to a router using a network connection cable 203.

The compatibility adapter 200 includes an ASIC (Application Specific Integrated Circuit) 210, an old-generation processor unit 230, a graphics processor 238, a memory 240, and a flash memory 242.

The old-generation processor unit 230 includes a main processor 232, an I/O processor 234, and a sound processor 236. These components are equivalent to the main processor 140, the I/O processor 130, and the sound processor 120 of the old-generation game device 100 of Fig. 1, respectively, and provide the arithmetic processing function of the old-generation game device 100.

The graphics processor 238 is equivalent to the graphics processor 150 of the old-generation game device 100 of Fig. 1 and provides the rendering function of the old-generation game device 100.

The ASIC 210 is an application-specific integrated circuit provided for global control of the compatibility adapter 200 and includes a hub 212, an encryption section 214, a CPU/DMA/MAC 216, a system controller 218, and a boot ROM 220.

The system controller 218 performs systems control such as fan control, voltage control, and temperature monitoring. A boot code for starting the compatibility adapter 200 is stored in the boot ROM 220, and the compatibility adapter 200 reads the boot code from the boot ROM 220 at power-on and is started accordingly.

The hub 212 has two ports, which are connected to the first and second network connection terminals 208 and 209. The data transmitted from the old-generation game device 300 is input to the first port of the hub 212 via the network connection cable 202 connected to the first terminal 208, decrypted by the encryption unit 214, processed by the CPU/DMA/MAC 216, and supplied to the I/O processor 234 of the old-generation processor unit 230.

The data generated by the old-generation processor unit 230 or the graphics processor 238 is turned into packets by the CPU/DMA/MAC 216, decrypted by the encryption unit 214, output from the first port of the hub 212, and transmitted to the new-generation game device 300 via the cable 202 connected to the first terminal 208.

The data transmitted by the new-generation game device 300 to an external network is input to the first port of the hub 212 via the cable 202 connected to the first terminal 208, output from the second port via the hub 212, and transmitted to the router via the network connection cable 203 connected to the second terminal 209. The data received by the new-generation game device 300 from an external network is input to the second port via the cable 203 connected to the second terminal 209, output from the first port via the hub 212, and transmitted to the new-generation game device 300 via the cable 202 connected to the first terminal 208.

Thus, data communication between the new-generation game device 300 and the compatibility adapter 200 and data communication between the new-generation game device 300 and an external network can be independent of each other. Therefore, the new-generation game device 300 can exchange data with the compatibility adapter 200 to perform a compatibility process, even while the new-generation game device 300 is exchanging data with an external network, thereby preventing a delay in the compatibility process from occurring due to network communication.

Another example of network connection will be described. When a game title supporting a network and adapted for an old model is run, arithmetic processing is performed by using the compatibility function of the compatibility adapter 200, and the data is input and output between the new-generation game device 300 and the compatibility adapter via the first port of the hub 212. On the other hand, when data communication with an external network is required in the game title concerned, the data is exchanged via the second port of the hub 212.

Still another example of network connection will be described. While running a game title for an old model using the compatibility function of the compatibility adapter 200, the new-generation game device 300 may download a content, etc. in the background. In this case, the content data downloaded from an external server is input o the second port of the hub 212, output from the first port via the hub 212, and received by the new-generation game device 300.

The hub 212 may have a priority control function that assigns a band so that priority may be given to the data communication between the new-generation game device 300 and the compatibility adapter 200 over the data communication between the new-generation game device 300 and an external network. The priority band assignment control may be exercised according to the game title. Basically, a band is assigned to the communication of game data between the new-generation game device 300 and the compatibility adapter 200 in preference to the data communication between the new-generation game device 300 and an external network. The order of priority in band assignment may be changed for a specific game title. Alternatively, band assignment may be dynamically changed using the privilege of the system software of the new-generation game device 300.

The encryption unit 214 performs an encryption process for maintaining the privacy of the communication between the new-generation game device 300 and the compatibility adapter 200, and also performs a process of decoding the encrypted communication.

For compatibility with the old model, the signal read from a disk in the new-generation game device 300 and the data input via the input device are taken out from the new-generation game device 300 and input to the compatibility adapter 200 via the network connection cable 202. The data processed by the old-generation processor unit 230 and the graphics processor 238 of the compatibility adapter 200 is again taken out from the compatibility adapter 200 and input to the new-generation game device 300 via the network connection cable 202. Thus, since the data that should otherwise be exchanged via the internal bus of a game device is transmitted and received via a network between the new-generation game device 300 and the compatibility adapter 200, encryption for maintaining the privacy of data is needed from the viewpoint of preventing hacking.

The encryption unit 214 decodes the encrypted data transmitted from the new-generation game device 300 and encrypts the data processed by the old-generation processor unit 230 and the graphics processor 238 in order to transmit the data to the new-generation game device 300.

The CPU/DMA/MAC216 is a control unit having the function of a CPU, a DMA (Direct Memory Access), and MAC (Media Access Control). The memory access function is implemented by the memory controller 222, which controls access to the memory 240, and the flash memory controller 224, which controls access to the flash memory 242. MAC provides functions such as packetization and error detection for transmission and reception of data over a network. Also built in is a DVD decoder emulator 226, which emulates the DVD decoder 110 of the old-generation game device 100 of Fig. 1 by software.

The DVD decoder emulator 226 demodulates the reproduced signal that the new-generation game device 300 reads from the disk 302. If the DVD decoder of the new-generation game device 300 demodulates the reproduced signal, the data produced by the demodulation will be of a large volume so that it could take time to transmit the data to the compatibility adapter 200 via a network and increase latency to return the data subjected to compatibility processing to the new-generation game device 300.

For example, the signal speed will be about 44 Mbps when the DVD signal is not demodulated but will be increased to 1168 Mbps when the DVD signal is demodulated.

Therefore, it is realistic to acquire the reproduced signal that the DVD decoder of the new-generation game device 300 reads from the disk 302 before demodulating the signal and to transmit it to the compatibility adapter 200 via a network. The DVD decoder emulator 226 is built in the compatibility adapter 200 so that the compatibility adapter 200 is configured to demodulate the reproduced signal transmitted from the new-generation game device 300.

The graphics processor 238 is connected to the main processor 232, runs a rendering process directed by the main processor 232, and gives video data to the CPU/DMA/MAC 216.

A serial interface 252, a USB interface 254, an Ethernet (registered trademark) interface 256, and an internal bus 250 are provided between the CPU/DMA/MAC 216 and the I/O processor 234 so as to carry input and output data of the game controller or the memory card, USB data, network data, and internal bus data, respectively. These interfaces are required in order to provide the compatibility adapter 200 with the function of the I/O processor 130 of the old-generation game device 100.

The sound processor 236 supplies reproduced audio data to the CPU/DMA/MAC 216.

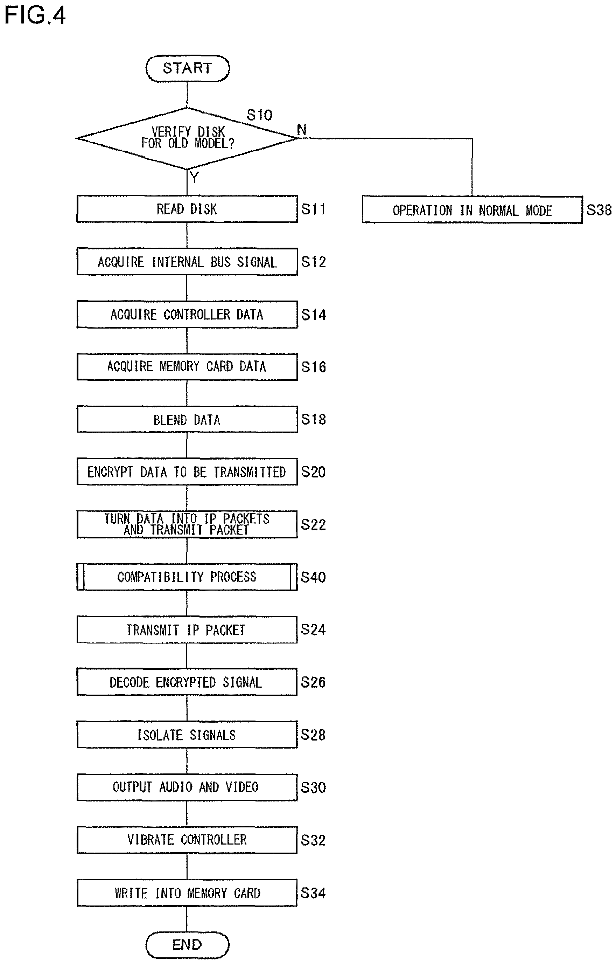

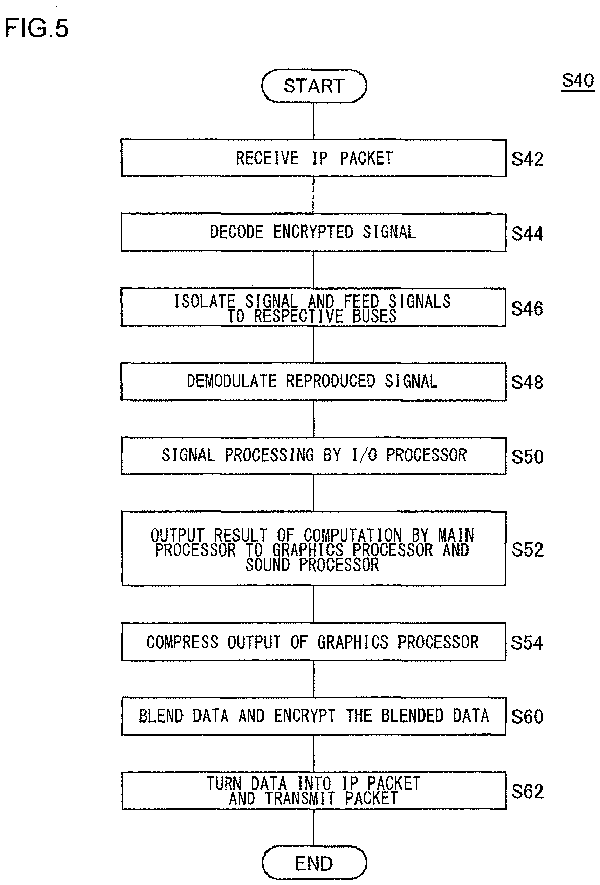

The compatibility process by the compatibility adapter 200 will be described by referring to Figs. 4 and 5.

Fig. 4 is a flowchart showing how the compatibility process proceeds in the new-generation game device 300 and the compatibility adapter 200.

The new-generation game device 300 authenticates the disk 302 inserted in the disk drive and determines whether the disk 302 is for a new model or for an old model (S10). If the disk 302 is for a new model (N in S10), the new-generation game device 300 operates in the normal mode and reads a game program from the disk 302 and runs the game (S38) .

If the disk 302 is for an old model (Y in S10), the disk drive of the new-generation game device 300 reads the disk 302 and acquire a reproduced signal (S11). A reproduced signal is supplied to the internal bus in the new-generation game device 300. The new-generation game device 300 acquires the internal bus signal (S12).

The new-generation game device 300 acquires the controller signal input from the game device controller 306 (S14) and acquires the data input and output in the memory card 304 (S16). Subsequently, the new-generation game device 300 superimposes the internal bus signal, various data including controller data and memory card data (S18) onto each other, and encrypts the superimposed signal and data (S20). Subsequently, the signal encrypted for transmission over a network is turned into IP packets and transmitted to the compatibility adapter 200 via the network connection cable 202 (S22).

The compatibility adapter 200 receives the IP packet from the new-generation game device 300 and runs a compatibility process (S40). The compatibility process by the compatibility adapter 200 will be described in detail in Fig. 5.

The new-generation game device 300 receives the data subjected to the compatibility process in the form of an IP packet from the compatibility adapter 200 via the network (S24) .

The new-generation game device 300 decodes the encrypted IP packet thus received (S26). The new-generation game device 300 retrieves various signals isolated from each other by carrying out packet processing on the decoded signal, and places the signals on the bus (S28). Thereby, the controller signal, the data to be output to the memory card, the audio signal, the video signal, etc. are retrieved. The new-generation game device 300 outputs sound and video (S30).

The new-generation game device 300 vibrates the game device controller 306 in accordance with the controller signal (S32). The new-generation game device 300 also writes the data to be output to the memory card into the memory card 304 (S34) .

Fig. 5 is a flowchart showing how the compatibility process by the compatibility adapter 200 proceeds in detail.

The hub 212 of the compatibility adapter 200 receives the IP packet from the new-generation game device 300 (S42), and the encryption unit 214 decodes the encrypted packet (S44). Subsequently, the CPU/DMA/MAC 216 subjects the decoded packet to packet processing. The CPU/DMA/MAC216 isolates the decoded signals and feeds the signals to respective buses (S46). Thereby, the controller signal, the data to be output to the memory card, the audio signal, the video signal, etc. are retrieved.

The DVD decoder emulator 226 of the new-generation game device 300 receives the reproduced signal read from the disk 302 and demodulates the signal (S48).

The I/O processor 234 receives the signals from the CPU/DMA/MAC 216 and delivers the signals to the main processor 232 (S50).

The main processor 232 performs computation based on the received data and outputs the result to the graphics processor 238 and the sound processor 236 (S52).

The graphics processor 238 delivers video data to the CPU/DMA/MAC 216, the sound processor 236 delivers sound data to the CPU/DMA/MAC 216, and the CPU/DMA/MAC 216 compresses the video output of the graphics processor 238 (S54) .

The CPU/DMA/MAC 216 superimposes the various data onto each other and encrypts the blended data (S60). Subsequently, the CPU/DMA/MAC 216 turns the encrypted data into IP packets and transmits the packetized data to the new-generation game device 300 via the hub 212 (S62). The transmitted data includes controller data for vibrating the game device controller 306 and memory card data to be written in the memory card 304.

In the compatibility process by the compatibility adapter 200, the difference in clock frequency between the new-generation game device 300 and the compatibility adapter 200 may pose a problem. If the clock frequency of the compatibility adapter 200 is smaller than the clock frequency of the new-generation game device 300, displacement occurs between the cycle of frames rendered by the graphics processor 238 of the compatibility adapter 200 and the cycle of frames that the new-generation game device 300 displays on the display. When this gap is accumulated exceeding predetermined permitted time, the gap may be canceled by skipping frames rendered by the graphics processor 238 of the compatibility adapter 200 so as to drop frames. The CPU/DMA/MAC 216 of the compatibility adapter 200 or the processor of the new-generation game device 300 may determine the rate at which to skip frames based on the difference in the clock frequency, and may run the process of skipping frames accordingly.

A surplus computing power is created in the new-generation game device 300 by leaving the compatibility process to the compatibility adapter 200. The normal upconverting process is performed using the surplus computing power. However, in order to reduce the delay due to the compatibility process as small as possible, the new-generation game device 300 may output the non-upconverted data for rendered frames, omitting the upconverting process usually performed. An upconverting process is a process whereby the quality of the output image data is improved, the frame rate and/or the spatial resolution is increased in order to adapt to the resolution of the display. An upconverting process increases the time before the image is output. When it takes time for the new-generation game device 300 to process the data received from the compatibility adapter 200, it will become difficult for the new-generation game device 300 to receive the result of arithmetic processing from the compatibility adapter 200 within one frame and to output to the display. By omitting an upconverting process, the arithmetic processing result can be received within one frame and output to the display.

As described above, the claimed embodiment is configured such that the compatibility adapter 200 is externally connected to the new-generation game device 300 to provide the new-generation game device 300 with downward compatibility. To run software for an old model, input and output through the game device controller or the memory card are implemented by using the input and output device as connected to the new-generation game device 300, and arithmetic processing can be executed by the compatibility adapter 200. In this way, the new-generation game device 300 can run a game application for an old model by using the same game machine controller 306 or the same memory card 304 as used in an application for a new model.

Where the processing capability of the processor of the new-generation game device 300 is not sufficient to emulate the arithmetic function of the old-generation game device on a software basis, the inventive feature is particularly advantageous in that the arithmetic processing function of the hardware of the compatibility adapter 200 is exploited to achieve the compatibility function without reducing the processing speed. Graphics processing requires particularly heavy processing power so that it is difficult to achieve compatibility only by software-based emulation. Thus, the compatibility function embodied on hardware such as the compatibility adapter 200 should be made available.

According to the claimed embodiment, users will enjoy the benefit of cost efficiency because only those users wishing to use a game title for an old model need purchase the compatibility adapter 200 and connect to the new-generation game device 300 via the network.

So long as the signal transfer speed between the new-generation game device 300 and the compatibility adapter 200 is sufficiently high and the processing delay is sufficiently small, substantial flexibility can be exercised in assigning the task of arithmetic processing to the new-generation game device 300 and the compatibility adapter 200. For example, only video processing may be assigned to the compatibility adapter 200, or the data produced by demodulating a disk signal in the disk drive of the new-generation game device 300 may be supplied to the compatibility adapter 200.

Communication between the new-generation game device 300 and the compatibility adapter 200 may not necessarily be achieved by using a network like an Ethernet (registered trademark) so long as the signal transmission speed is sufficiently high and the latency is sufficiently small. For example, a bus interface, such as USB, for connecting a peripheral device may be used. In the second embodiment, a description will be given of using USB for communication between the new-generation game device 300 and the compatibility adapter 200.

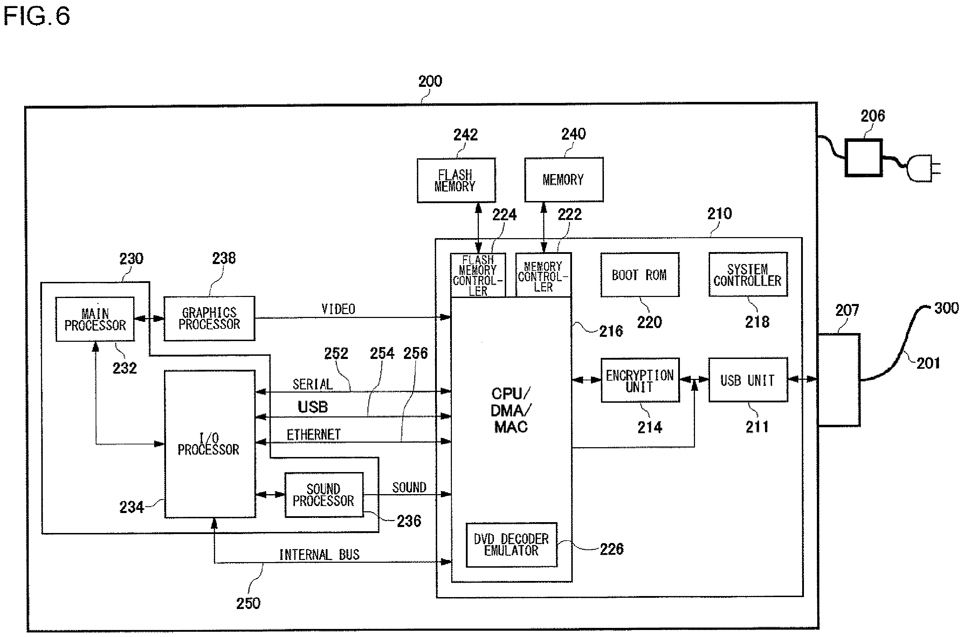

Second, unclaimed, embodiment Fig. 6 shows the configuration of the compatibility adapter 200 according to the second embodiment. The difference from the compatibility adapter 200 of the first embodiment is that the new-generation game device 300 and the compatibility adapter 200 are connected by a USB connection cable 201, and a USB unit 211 is provided instead of the hub 212.

The data transmitted from the new-generation game device 300 is input to the USB connection terminal 207 via the USB connection cable 201, processed in the USB unit 211, and delivered to the encryption unit 214. The USB unit 211 outputs the data that should be transmitted to the new-generation game device 300 from the USB connection terminal 207.

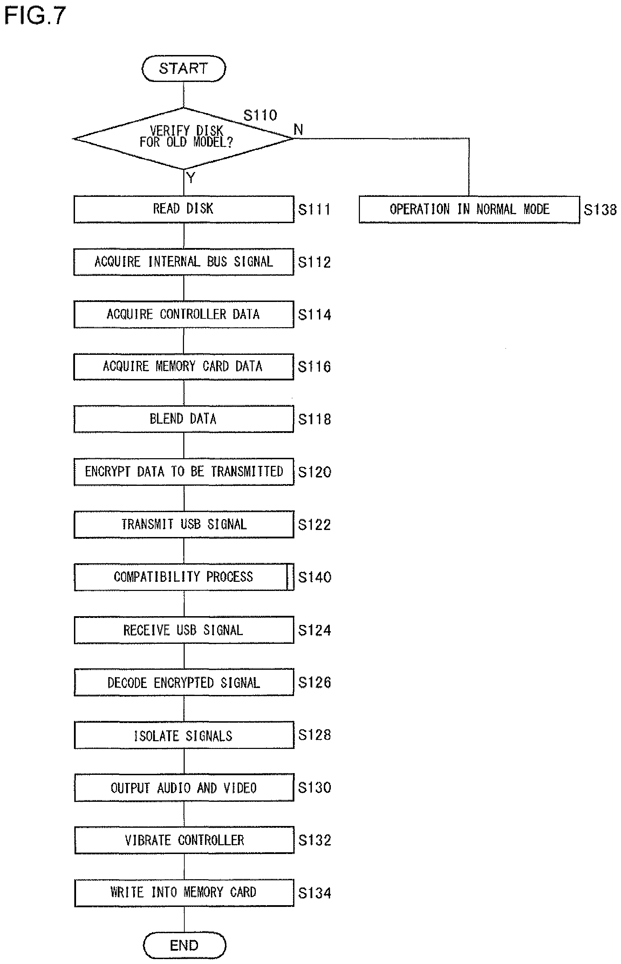

Fig. 7 is a flowchart showing the compatibility processing method according to the second, embodiment.

The new-generation game device 300 authenticates the disk 302 inserted in the disk drive and determines whether the disk 302 is for a new model or for an old model (S110). If the disk 302 is for a new model (N in S110), the new-generation game device 300 is operated in the normal mode and reads a game program from the disk 302 and runs the game program accordingly (S138).

If the disk 302 is for an old model (Y in S110), the disk drive of the new-generation game device 300 reads the disk 302 (Sill) and acquires the reproduced signal supplied to the internal bus (S112).

The new-generation game device 300 acquires the controller signal input from the game device controller 306 (S114) and acquires the data input and output in the memory card 304 (S116). Subsequently, the new-generation game device 300 superimposes the internal bus signal, various data including controller data and memory card data onto each other (S118). The data for transmission thus superimposed is encrypted (S120), converted into a USB signal, and transmitted to the compatibility adapter 200 via the USB connection cable 201 (S122).

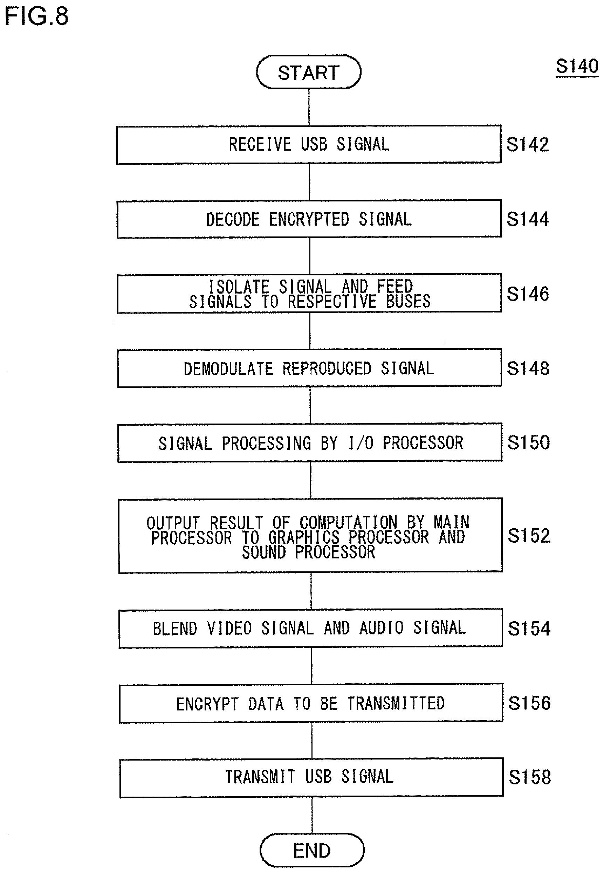

The compatibility adapter 200 receives the USB signal from the new-generation game device 300 and runs a compatibility process (S140). The compatibility process by the compatibility adapter 200 will be described in detail in Fig. 8.

The new-generation game device 300 receives the data subjected to the compatibility process in the form of a USB signal from the compatibility adapter 200 (S124).

The new-generation game device 300 decodes the encrypted USB signal thus received (S126), isolates and retrieves the respective signals, and places the signals on the bus (S128). Thereby, the controller signal, the data to be output to the memory card, the audio signal, the video signal, etc. are retrieved.

The new-generation game device 300 outputs sound and video (S130). The new-generation game device 300 vibrates the game device controller 306 in accordance with the controller signal (S132). The new-generation game device 300 also writes the data to be output to the memory card into the memory card 304 (S134).

Fig. 8 is a flowchart showing how the compatibility process in S140 by the compatibility adapter 200 proceeds in detail.

The USB unit 211 of the compatibility adapter 200 receives the USB signal from the new-generation game device 300 (S142), and the encryption unit 214 decodes the encrypted USB signal (S144). The CPU/DMA/MAC 216 isolates the decoded signals and feeds the signals to respective buses (S146). Thereby, the controller signal, the data to be output to the memory card, the audio signal, the video signal, etc. are retrieved.

The DVD decoder emulator 226 of the new-generation game device 300 receives the reproduced signal read from the disk 302 and demodulates the signal (S148).

The I/O processor 234 receives the signals from the CPU/DMA/MAC 216 and delivers the signals to the main processor 232 (S150).

The main processor 232 performs computation based on the received data and outputs the result to the graphics processor 238 and the sound processor 236 (S152).

The graphics processor 238 delivers video data to the CPU/DMA/MAC 216, the sound processor 236 delivers sound data to the CPU/DMA/MAC 216, and the CPU/DMA/MAC 216 superimposes the video signal and the audio signal onto each other (S154).

The encryption unit 214 encrypts the superimposed data for transmission and delivers the encrypted data to the USB unit 211 (S156). The USB unit 211 transmits the USB signal to the new-generation game device 300 (S158). The transmitted data includes controller data for vibrating the game device controller 306 and memory card data to be written in the memory card 304.

### [DESCRIPTION OF THE REFERENCE NUMERALS]

100 old-generation game device, 102 disk, 104 memory card, 106 game device controller, 110 DVD decoder, 120 sound processor, 130 I/O processor, 140 main processor, 150 graphics processor, 200 compatibility adapter, 201 USB connection cable, 202 network connection cable, 206 power supply adapter, 210 ASIC, 211 USB unit, 212 hub, 214 encryption unit, 216 CPU/DMA/MAC, 226 DVD decoder emulator, 230 old-generation processor unit, 232 main processor, 234 I/O processor, 236 sound processor, 238 graphics processor, 240 memory, 242 flash memory, 300 new-generation game device, 302 disk, 304 memory card, 306 game device controller

### [INDUSTRIAL APPLICABILITY]

The present invention can be used as a compatibility adapter device externally connected to an entertainment device.

## Claims

1. A compatibility adapter device (200) comprising:
an external connection interface (202, 201) configured to be connected to an external connection terminal of a new-generation entertainment device (300);
a compatibility processor unit (230) configured to be compatible with a processing function of an old-generation entertainment device (100);
a control unit (216) configured to receive data, which has been input to the new-generation entertainment device (300), from the new-generation entertainment device (300) via the external connection interface (202, 201),
the control unit (216) being configured to receive from the new-generation entertainment device (300) input data from a recording medium (302) via the external connection interface (202, 201), in response to the new-generation entertainment device (300) determining that the recording medium (302) is of an old-generation type storing application software for the old-generation entertainment device;
the control unit (216) being configured to cause the compatibility adapter device (200) to process said input data by providing the received input data to the compatibility processor unit (230) for subjecting to a compatibility process which includes graphics rendering;
the control unit (216) being further configured to subsequently transmit back to the new-generation entertainment device (300) via the external connection interface (202, 201) the data processed by the compatibility processor unit (230),
wherein one or more frames rendered by the compatibility processor unit (230) are skipped in order to cancel displacement in the cycles of frames due to difference in the clock frequencies of the new-generation entertainment device (300) and the old-generation entertainment device (100); and
an emulator unit (226) configured to demodulate a reproduced pre-demodulation signal read from the recording medium (302),
wherein, when the type of the recording medium (302) storing application software is for the old-generation entertainment device (100), the control unit (216) receives the reproduced pre-demodulation signal that has been read from the recording medium (302) in the disk drive of the new-generation entertainment device (300) from the new-generation entertainment device (300) via the external connection interface (202, 201), supplies the received signal to the emulator unit (226), and supplies the data demodulated by the emulator unit (226) to the compatibility processor unit (230).

2. The compatibility adapter device (200) according to claim 1,
wherein the external connection interface (202, 201) is a network interface and is provided with a hub (212) having a first port for communicating with the new-generation entertainment device (300) and a second port for communicating with an external network,
wherein data exchanged between the new-generation entertainment device (300) and the compatibility adapter device (200) is packetized and is transmitted and received via the hub (212),
wherein data to be transmitted from the new-generation entertainment device (300) to the external network is input to the first port of the hub (212) and output from the second port of the hub (212), and
wherein data to be received by the new-generation entertainment device (300) from the external network is input to the second port of the hub (212) and output from the first port of the hub (212).

3. The compatibility adapter device (200) according to claim 1, wherein the external connection interface (202, 201) is a bus interface (211) for connecting a peripheral device, and data to be exchanged between the new-generation entertainment device (300) and the compatibility adapter device (200) is converted into a signal adapted to a bus interface standard before being transmitted and received via the bus interface (211).

4. The compatibility adapter device (200) according to claims 1 through 3,
wherein the compatibility processor unit (230) delivers processed video data to the control unit (216) without upconverting the rendered video data.

5. A compatibility processing method adapted for a compatibility adapter device (200) comprising a compatibility processor unit (230) configured to be compatible with a processing function of an old-generation entertainment device (100), the compatibility adapter device connected to an external connection terminal of a new-generation entertainment device (300) in order to provide the new-generation entertainment device (300) with downward compatibility with the old-generation entertainment device (100), comprising:
receiving data, which has been input to the new-generation entertainment device (300), from the new-generation entertainment device (300) via an external connection interface (202, 201),
receiving from the new-generation entertainment device (300) input data from a recording medium (302) via the external connection interface (202, 201), in response to the new-generation entertainment device (300) determining that the recording medium (302) is of an old generation type storing application software for the old-generation entertainment device;
causing the compatibility adapter device (200) to process said input data, by providing the received input data to a compatibility processor unit (230) of the compatibility adapter device (200) for subjecting to a compatibility process which includes graphics rendering;
subsequently transmitting back to the new-generation entertainment device (300) via the external connection interface (202, 201) the data processed by the compatibility processor unit (230),
wherein one or more frames rendered by the compatibility processor unit (230) are skipped in order to cancel displacement in the cycles of frames due to difference in the clock frequencies of the new-generation entertainment device (300) and the old-generation entertainment device (100); receiving, when the type of the recording medium (302) storing application software is for the old-generation entertainment device (100), a reproduced pre-demodulation signal that has been read from the recording medium (302) in the disk drive of the new-generation entertainment device (300) from the new-generation entertainment device (300) via the external connection interface (202, 201);
demodulating the reproduced pre-demodulation signal as received, using an emulator unit (226) in the compatibility adapter device (200); and
supplying data thus demodulated to the compatibility processor unit (230).

## Patentansprüche

1. Kompatibilitätsadaptervorrichtung (200), die Folgendes umfasst:
eine Externverbindungsschnittstelle (202, 201), die dazu ausgelegt ist, mit einem Externverbindunganschluss einer Unterhaltungsvorrichtung (300) der neuen Generation verbunden zu werden;
eine Kompatibilitätsprozessoreinheit (230), die dazu ausgelegt ist, mit einer Verarbeitungsfunktion einer Unterhaltungsvorrichtung (100) der alten Generation kompatibel zu sein;
eine Steuereinheit (216), ausgelegt zum Empfangen von Daten, die in die Unterhaltungsvorrichtung (300) der neuen Generation eingegeben wurden, von der Unterhaltungsvorrichtung (300) der neuen Generation über die Externverbindungsschnittstelle (202, 201),
wobei die Steuereinheit (216) ausgelegt ist zum Empfangen, von der Unterhaltungsvorrichtung (300) der neuen Generation, von Eingabedaten von einem Aufzeichnungsmedium (302) über die Externverbindungsschnittstelle (202, 201) als Reaktion darauf, dass die Unterhaltungsvorrichtung (300) der neuen Generation bestimmt, dass das Aufzeichnungsmedium (302) vom Typ der alten Generation ist und Anwendungssoftware für die Unterhaltungsvorrichtung der alten Generation speichert;
wobei die Steuereinheit (216) dazu ausgelegt ist, zu bewirken, dass die Kompatibilitätsadaptervorrichtung (200) die Eingabedaten verarbeitet, indem die empfangenen Eingabedaten der Kompatibilitätsprozessoreinheit (230) bereitgestellt werden, um sie einem Kompatibilitätsprozess zu unterziehen, der Grafik-Rendern beinhaltet;
wobei die Steuereinheit (216) ferner dazu ausgelegt ist, die durch die Kompatibilitätsprozessoreinheit (230) verarbeiteten Daten anschließend über die Externverbindungsschnittstelle (202, 201) zurück an die Unterhaltungsvorrichtung (300) der neuen Generation zu übertragen,
wobei ein oder mehrere durch die Kompatibilitätsprozessoreinheit (230) gerenderte Frames übersprungen werden, um einen Versatz in den Zyklen von Frames aufgrund einer Differenz der Taktfrequenzen der Unterhaltungsvorrichtung (300) der neuen Generation und der Unterhaltungsvorrichtung (100) der alten Generation aufzuheben; und
eine Emulatoreinheit (226), ausgelegt zum Demodulieren eines von dem Aufzeichnungsmedium (302) gelesenen reproduzierten Prä-Demodulationssignals, wobei, wenn der Typ des Aufzeichnungsmediums (302), das Anwendungssoftware speichert, für die Unterhaltungsvorrichtung (100) der alten Generation ist, die Steuereinheit (216) das reproduzierte Prä-Demodulationssignal, das von dem Aufzeichnungsmedium (302) in dem Plattenlaufwerk der Unterhaltungsvorrichtung (300) der neuen Generation gelesen wurde, über die Externverbindungsschnittstelle (202, 201) von der Unterhaltungsvorrichtung (300) der neuen Generation empfängt, das empfangene Signal an die Emulatoreinheit (226) liefert und die durch die Emulatoreinheit (226) demodulierten Daten an die Kompatibilitätsprozessoreinheit (230) liefert.

2. Kompatibilitätsadaptervorrichtung (200) nach Anspruch 1,
wobei die Externverbindungsschnittstelle (202, 201) eine Netzwerkschnittstelle ist und mit einem Hub (212) mit einem ersten Port zum Kommunizieren mit der Unterhaltungsvorrichtung (300) der neuen Generation und einem zweiten Port zum Kommunizieren mit einem externen Netzwerk versehen ist,
wobei Daten, die zwischen der Unterhaltungsvorrichtung (300) der neuen Generation und der Kompatibilitätsadaptervorrichtung (200) ausgetauscht werden, paketisiert werden und über den Hub (212) übertragen und empfangen werden,
wobei von der Unterhaltungsvorrichtung (300) der neuen Generation an das externe Netzwerk zu übertragende Daten in den ersten Port des Hubs (212) eingegeben werden und aus dem zweiten Port des Hubs (212) ausgegeben werden, und
wobei durch die Unterhaltungsvorrichtung (300) der neuen Generation von dem externen Netzwerk zu empfangende Daten in den zweiten Port des Hubs (212) eingegeben werden und aus dem ersten Port des Hubs (212) ausgegeben werden.

3. Kompatibilitätsadaptervorrichtung (200) nach Anspruch 1, wobei die Externverbindungsschnittstelle (202, 201) eine Busschnittstelle (211) zum Verbinden einer Peripherievorrichtung ist und Daten, die zwischen der Unterhaltungsvorrichtung (300) der neuen Generation und der Kompatibilitätsadaptervorrichtung (200) auszutauschen sind, in ein an einen Busschnittstellenstandard angepasstes Signal umgewandelt werden, bevor sie über die Busschnittstelle (211) übertragen und empfangen werden.

4. Kompatibilitätsadaptervorrichtung (200) nach den Ansprüchen 1 bis 3,
wobei die Kompatibilitätsprozessoreinheit (230) verarbeitete Videodaten ohne Hochkonvertieren der gerenderten Videodaten an die Steuereinheit (216) liefert.

5. Kompatibilitätsverarbeitungsverfahren, eingerichtet für eine Kompatibilitätsadaptervorrichtung (200), umfassend eine Kompatibilitätsprozessoreinheit (230), die dazu ausgelegt ist, mit einer Verarbeitungsfunktion einer Unterhaltungsvorrichtung (100) der alten Generation kompatibel zu sein, wobei die Kompatibilitätsadaptervorrichtung mit einem Externverbindungsanschluss einer Unterhaltungsvorrichtung (300) der neuen Generation verbunden ist, um der Unterhaltungsvorrichtung (300) der neuen Generation eine Abwärtskompatibilität mit der Unterhaltungsvorrichtung (100) der alten Generation zu verleihen, umfassend:
Empfangen von Daten, die in die Unterhaltungsvorrichtung (300) der neuen Generation eingegeben wurden, von der Unterhaltungsvorrichtung (300) der neuen Generation über eine Externverbindungsschnittstelle (202, 201), Empfangen, von der Unterhaltungsvorrichtung (300) der neuen Generation, von Eingabedaten von einem Aufzeichnungsmedium (302) über die Externverbindungsschnittstelle (202, 201) als Reaktion darauf, dass die Unterhaltungsvorrichtung (300) der neuen Generation bestimmt, dass das Aufzeichnungsmedium (302) vom Typ der alten Generation ist und Anwendungssoftware für die Unterhaltungsvorrichtung der alten Generation speichert;
Bewirken, dass die Kompatibilitätsadaptervorrichtung (200) die Eingabedaten verarbeitet, indem die empfangenen Eingabedaten einer Kompatibilitätsprozessoreinheit (230) der Kompatibilitätsadaptervorrichtung (200) bereitgestellt werden, um sie einem Kompatibilitätsprozess zu unterziehen, der Grafik-Rendern beinhaltet;
anschließendes Zurückübertragen der durch die Kompatibilitätsprozessoreinheit (230) verarbeiteten Daten über die Externverbindungsschnittstelle (202, 201) an die Unterhaltungsvorrichtung (300) der neuen Generation,
wobei ein oder mehrere durch die Kompatibilitätsprozessoreinheit (230) gerenderte Frames übersprungen werden, um einen Versatz in den Zyklen von Frames aufgrund einer Differenz der Taktfrequenzen der Unterhaltungsvorrichtung (300) der neuen Generation und der Unterhaltungsvorrichtung (100) der alten Generation aufzuheben;
Empfangen, wenn der Typ des Aufzeichnungsmediums (302), das Anwendungssoftware speichert, für die Unterhaltungsvorrichtung (100) der alten Generation ist, eines reproduzierten Prä-Demodulationssignals, das von dem Aufzeichnungsmedium (302) in dem Plattenlaufwerk der Unterhaltungsvorrichtung (300) der neuen Generation gelesen wurde, über die Externverbindungsschnittstelle (202, 201) von der Unterhaltungsvorrichtung (300) der neuen Generation;
Demodulieren des reproduzierten Prä-Demodulationssignals wie empfangen unter Verwendung einer Emulatoreinheit (226) in der Kompatibilitätsadaptervorrichtung (200); und
Liefern der derart demodulierten Daten an die Kompatibilitätsprozessoreinheit (230).

## Revendications

1. Dispositif adaptateur de compatibilité (200) comprenant :
une interface de connexion externe (202, 201) configurée pour être connectée à une borne de connexion externe d'un dispositif de divertissement de nouvelle génération (300),
une unité de processeur de compatibilité (230) configurée pour être compatible avec une fonction de traitement d'un dispositif de divertissement d'ancienne génération (100),
une unité de commande (216) configurée pour recevoir des données qui ont été appliquées en entrée du dispositif de divertissement de nouvelle génération (300), depuis le dispositif de divertissement de nouvelle génération (300) par l'intermédiaire de l'interface de connexion externe (202, 201),
l'unité de commande (216) étant configurée pour recevoir en provenance du dispositif de divertissement de nouvelle génération (300) des données d'entrée provenant d'un support d'enregistrement (302) par l'intermédiaire de l'interface de connexion externe (202, 201) en réponse à la détermination par le dispositif de divertissement de nouvelle génération (300) de ce que le support d'enregistrement (302) est de type ancienne génération stockant un logiciel d'application pour le dispositif de divertissement d'ancienne génération,
l'unité de commande (216) étant configurée pour amener le dispositif adaptateur de compatibilité (200) à traiter lesdites données d'entrée en fournissant les données d'entrée reçues à l'unité de processeur de compatibilité (230) pour les soumettre à un traitement de compatibilité qui inclut un rendu graphique,
l'unité de commande (216) étant en outre configurée pour retransmettre ensuite les données traitées par l'unité de processeur de compatibilité (230) au dispositif de divertissement de nouvelle génération (300) par l'intermédiaire de l'interface de connexion externe (202, 201),
dans lequel une ou plusieurs trames rendues par l'unité de processeur de compatibilité (230) sont sautées afin d'annuler tout déplacement dans les cycles de trames dû à des différences de fréquences d'horloge du dispositif de divertissement de nouvelle génération (300) et du dispositif de divertissement d'ancienne génération (100), et
une unité d'émulation (226) configurée pour démoduler un signal de pré démodulation lu du support d'enregistrement (302),
dans lequel, lorsque le type de support d'enregistrement (302) qui stocke le logiciel d'application est destiné au dispositif de divertissement d'ancienne génération (100), l'unité de commande (216) reçoit le signal de pré démodulation reproduit qui a été lu à partir du support d'enregistrement (302) dans l'unité de disque du dispositif de divertissement de nouvelle génération (300) à partir du dispositif de divertissement de nouvelle génération (300) par l'intermédiaire de l'interface de connexion externe (202, 201), elle délivre le signal reçu à l'unité d'émulation (226) et délivre les données démodulées par l'unité d'émulation (226) à l'unité de processeur de compatibilité (230).

2. Dispositif adaptateur de compatibilité (200) selon la revendication 1,
dans lequel l'interface de connexion externe (202, 201) est une interface réseau et elle est dotée d'un concentrateur (212) possédant un premier port de communication avec le dispositif de divertissement de nouvelle génération (300) et un second port de communication avec un réseau externe,
dans lequel les données échangées entre le dispositif de divertissement de nouvelle génération (300) et le dispositif adaptateur de compatibilité (200) sont mises en paquets et sont transmises et reçues par l'intermédiaire du concentrateur (212),
dans lequel les données à transmettre depuis le dispositif de divertissement de nouvelle génération (300) jusqu'au réseau externe sont appliquées en entrée sur le premier port du concentrateur (212) et délivrées en sortie du second port du concentrateur (212), et
dans lequel les données à recevoir par le dispositif de divertissement de nouvelle génération (300) en provenance du réseau externe sont appliquées en entrée du second port du concentrateur (212) et délivrées en sortie du premier port du concentrateur (212).

3. Dispositif adaptateur de compatibilité (200) selon la revendication 1, dans lequel l'interface de connexion externe (202, 201) et une interface de bus (211) destinée à relier un dispositif périphérique, et les données à échanger entre le dispositif de divertissement de nouvelle génération (300) et le dispositif adaptateur de compatibilité (200) sont converties en un signal adapté à un standard d'interface de bus avant d'être transmises et reçues par l'intermédiaire de l'interface de bus (211).

4. Dispositif adaptateur de compatibilité (200) selon les revendications 1 à 3,
dans lequel l'unité de processeur de compatibilité (230) délivre des données vidéo traitées à l'unité de commande (216) sans conversion ascendante des données vidéo rendues.

5. Procédé de traitement de compatibilité conçue pour un dispositif adaptateur de compatibilité (200) comprenant une unité de processeur de compatibilité (230) configurée pour être compatible avec une fonction de traitement d'un dispositif de divertissement d'ancienne génération (100), le dispositif adaptateur de compatibilité étant connecté à une borne de connexion externe d'un dispositif de divertissement de nouvelle génération (300) dans le but de fournir au dispositif de divertissement de nouvelle génération (300) une compatibilité ascendante avec le dispositif de divertissement d'ancienne génération (100), comprenant :
la réception de données, qui ont été appliquées en entrée du dispositif de divertissement de nouvelle génération (300), depuis le dispositif de divertissement de nouvelle génération (300) par l'intermédiaire d'une interface de connexion externe (202, 201),
la réception, en provenance du dispositif de divertissement de nouvelle génération (300), de données d'entrée provenant d'un support d'enregistrement (302) par l'intermédiaire de l'interface de connexion externe (202, 201) en réponse à la détermination par le dispositif de divertissement de nouvelle génération (300) de ce que le support d'enregistrement (302) est de type ancienne génération stockant un logiciel d'application pour le dispositif de divertissement d'ancienne génération,
l'action consistant à amener le dispositif adaptateur de compatibilité (200) à traiter lesdites données d'entrée, en délivrant les données d'entrée reçues à une unité de processeur de compatibilité (230) du dispositif adaptateur de compatibilité (200) afin de les soumettre à un traitement de compatibilité qui inclut un rendu graphique,
la retransmission ultérieure au dispositif de divertissement de nouvelle génération (300) par l'intermédiaire de l'interface de connexion externe (202, 201) des données traitées par l'unité de processeur de compatibilité (230),
dans lequel une ou plusieurs trames rendues par l'unité de processeur de compatibilité (230) sont sautées afin d'annuler tout déplacement dans les cycles de trames dû à des différences de fréquences d'horloge du dispositif de divertissement de nouvelle génération (300) et du dispositif de divertissement d'ancienne génération (100),
la réception, lorsque le type de support d'enregistrement (302) qui stocke le logiciel d'application est destiné au dispositif de divertissement d'ancienne génération (100), d'un signal de pré démodulation reproduit qui a été lu du support d'enregistrement (302) dans l'unité de disque du dispositif de divertissement de nouvelle génération (300) à partir du dispositif de divertissement de nouvelle génération (300) par l'intermédiaire de l'interface de connexion externe (202, 201),
la démodulation du signal de pré démodulation reproduit tel qu'il est reçu, en utilisant une unité d'émulation (226) dans le dispositif adaptateur de compatibilité (200), et
la délivrance des données ainsi démodulées à l'unité de processeur de compatibilité (230).
